# EUROPEAN PATENT APPLICATION

(11) **EP 4 685 866 A1**
(43) Date of publication of application: **28.01.2026**
(21) Application number: 23943467.3
(22) Date of filing: 25.12.2023
(51) Int. Cl.: H01M 4/36, H01M 4/505, H01M 4/485, H01M 4/525, H01M 4/62, H01M 10/054, H01M 10/42

(54) **POSITIVE ELECTRODE MATERIAL, SECONDARY BATTERY AND ELECTRIC DEVICE**

(30) Priority: 27.06.2023 CN 202310775504
(71) Applicant: Sunwoda Mobility Energy Technology Co., Ltd., Shenzhen, Guangdong 518107 (CN)
(72) Inventor: LI, Qing, Shenzhen, Guangdong 518107 (CN); WANG, Baoyu, Shenzhen, Guangdong 518107 (CN); CHEN, Tao, Shenzhen, Guangdong 518107 (CN); BU, Shengzhou, Shenzhen, Guangdong 518107 (CN)
(74) Representative: Boult Wade Tennant LLP
(86) International application number: PCT/CN2023/141630
(87) International publication number: WO 2025/000996

(57) **Abstract**

A positive electrode material, a secondary battery and an electric device. The positive electrode material comprises an inner core and a coating layer arranged on a surface of the inner core, wherein the inner core comprises a sodium-ion layered oxide, and the coating layer comprises a spinel-type lithium salt. The spinel-type lithium salt is used for tightly coating the layered positive electrode material, thereby solving the problems of the interface impedance of the positive electrode materials of the existing sodium-ion battery being relatively large, and a positive electrode adhesive being prone to being attacked.

## Description

This application claims the priority of Chinese patent Application No. 202310775504.X, submitted to the Chinese Patent Office on June 27, 2023, and entitled "POSITIVE ELECTRODE MATERIAL, SECONDARY BATTERY AND ELECTRIC DEVICE", which is incorporated herein by reference in its entirety.

### FIELD

The present disclosure relates to the technical field of battery manufacturing, and in particular to a positive electrode material, a secondary battery, and an electric device.

### BACKGROUND

Currently, due to the advantages of sodium layered oxide positive electrode materials such as high theoretical capacity, abundant sodium resources, absence of crystal water inside, and compatibility of their production method with lithium-ion batteries, sodium-ion batteries have received widespread attention.

However, the interface impedance of the layered positive electrode materials in existing sodium-ion batteries is relatively high, resulting in poor rate capability of the batteries. Meanwhile, the layered positive electrode material is highly alkaline, and alkaline groups attack the positive electrode adhesives such as polyvinylidene fluoride (PVDF), etc., during homogenization, which leads to the gelation of slurry and difficulty in processing.

### SUMMARY

A technical problem to be solved by the present disclosure is to provide a positive electrode material, a secondary battery, and an electric device, so as to solve the problems of the interface impedance of the positive electrode materials of the existing sodium-ion battery being relatively large, and a positive electrode adhesive being prone to being attacked.

In order to solve the above problems, the present disclosure is achieved through the following technical solutions:
The present disclosure proposes a positive electrode material, where the positive electrode material comprises an inner core and a coating layer arranged on a surface of the inner core, the inner core comprises a sodium-ion layered oxide, and the coating layer comprises a spinel-type lithium salt.

Further, in the positive electrode material, the structural general formula of the spinel-type lithium salt includes LiₐY₂O₄, where 0.8 ≤ a ≤ 1.1, and A is selected from at least one of Fe, Ni, Cu, Zn, Co, Ti, Mg, Al, Nb, Ta, and Mn.

Further, in the positive electrode material, the spinel-type lithium salt comprises one or more of LiNi_{0.5}Mn_{1.5}O₄ and LiMn₂O₄.

Further, in the positive electrode material, the space group of the LiMn₂O₄ comprises a mixed phase of Fd-3m and I41/amd.

Further, in the positive electrode material, unit cell parameters of LiMn₂O₄ in the Fd-3m phase satisfy a1=b1=c1, and unit cell parameters of LiMn₂O₄ in the I41/amd phase satisfy a2=b2≠c2;
and/or
40%<a2/a1<60%, 95%<c2/c1<105%.

Further, in the positive electrode material, 8<a1=b1=c1<9, 3.2 < a2=b2<7.2, and 0.45<c2<9.45.

Further, in the coating layer, the molar proportion of LiMn₂O₄ in the Fd-3m phase is 60~95%.

Further, the pH value of the positive electrode material is 10.4~12.5.

Further, the thickness of the coating layer is 50~500 nm.

Further, the thickness of the coating layer is 100~300 µm.

Further, the particle size Dv50 of the positive electrode material is 1~20 µm.

Further, in the positive electrode material, the crystal structure of the sodium-ion layered oxide includes P2 type and O3 type;
and/or the chemical formula of the sodium-ion layered oxide is NaₓMO₂, where M is selected from at least one of Fe, Ni, Li, Cu, Zn, Co, Ti, and Mn, and 1>x>0.67.

The present disclosure also proposes a secondary battery comprising a positive electrode plate, where the positive electrode plate comprises a positive electrode current collector and the above-mentioned positive electrode material disposed on the positive electrode current collector.

The present disclosure also proposes an electric device comprising the above-mentioned secondary battery, which serves as a power supply for the electric device.

Compared with existing technologies, the embodiments of the present disclosure include the following advantages:
in the embodiments of the present disclosure, the provided positive electrode material comprises an inner core and a coating layer arranged on the surface of the inner core, where the inner core comprises a sodium-ion layered oxide, and the coating layer comprises a spinel-type lithium salt. Where, the coating layer tightly coats the layered positive electrode material, which may reduce the contact interface between the layered positive electrode material and an electrolyte, alleviating the dissolution of metal ions, and improving the cycle performance of the battery. Meanwhile, the spinel-type lithium salt in the coating layer may provide a three-dimensional channel for sodium ion diffusion at the interface between the positive electrode material and the electrolyte, increasing the diffusion path and improving the diffusion rate, thereby enhancing the rate capability of the battery cell. In addition, the alkalinity of the spinel-type lithium salt is low, which may not only reduce the attack to the positive electrode adhesives, but also allow the deintercalation of lithium ions from the positive electrode preceding over sodium ions during the formation process and to form a film at the negative electrode, forming a dense SEI film composed of lithium salt and improving the cycle stability. Therefore, the positive electrode material provided in the embodiments of the present disclosure solves the problems of the interface impedance of the positive electrode materials of the existing sodium-ion battery being relatively large, and a positive electrode adhesive being prone to being attacked.

It should be understood that the above general description and the subsequent detailed description are only exemplary and explanatory, and should not limit the present disclosure.

### BRIEF DESCRIPTION OF THE DRAWINGS

In order to more clearly illustrate the technical solutions in embodiments of the present disclosure, the drawings required for use in the description of the embodiments of the present disclosure will be briefly introduced below. Obviously, the drawings described below are only some embodiments of the present disclosure, and for those of ordinarily skilled in the art, other drawings may be obtained based on these drawings without paying creative work.

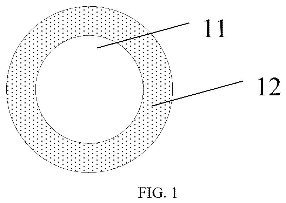

FIG. 1 is a structural schematic diagram of the positive electrode material provided in the embodiments of the present disclosure.

### Description of reference symbols:

11-inner core, 12-coating layer

### DETAILED DESCRIPTION OF THE EMBODIMENTS

The present disclosure will be explained in detail below in conjunction with the described embodiments. Although the specific embodiments of the present disclosure are shown, it should be understood that the present disclosure may be implemented in various forms and should not be limited by the embodiments described herein. On the contrary, these embodiments are provided to enable a more thorough understanding of the present disclosure and to fully convey the scope of the present disclosure to those skilled in the art.

It should be noted that certain words are used in the description and claims to refer to specific components. Those skilled in the art should understand that technical personnels may use different terms to refer to the same component. The description and claims do not use the difference of terms as a way to distinguish components, but use the difference of functions of components as distinguishing criteria. For example, since the term "includes" or "including" as mentioned throughout the description and claims is an open-ended language, it should be interpreted as "including but not limited to". The subsequent description in the description is a preferred embodiment for implementing the present disclosure, however, the description is intended for the general principles of the description and is not intended to limit the scope of the present disclosure. The scope of protection of the present disclosure shall be as defined by the appended claims.

The applicant of the present disclosure has found that although sodium-ion batteries have high theoretical capacity and rated voltage, the interface impedance of their layered oxide positive electrode materials is high, which affects the rate capability of the batteries. Moreover, at high voltages, it is easy to cause the dissolution of metal ions such as manganese, etc., resulting in a decrease in the cycle performance of the battery. Meanwhile, the layered positive electrode material of the sodium-ion batteries is highly alkaline, and the alkaline groups attack the positive electrode adhesives such as polyvinylidene fluoride, etc., during homogenization, which leads to the gelation of slurry and difficulty in processing.

In order to solve the above problems, the embodiments of the present disclosure provide a positive electrode material, as shown in FIG. 1, the positive electrode material includes an inner core 11 and a coating layer 12 arranged on a surface of the inner core 11, where the inner core 11 includes a sodium-ion layered oxide, and the coating layer 12 includes a spinel-type lithium salt.

In the present disclosure, the coating layer refers to a spinel-type lithium salt layer distributed on at least a portion of the surface of the sodium-ion layered oxide particles, the distribution area of the spinel-type lithium salt layer accounts for more than 70% of the surface of the sodium-ion layered oxide particles, and it is preferred that the spinel-type lithium salt layer completely coats the surface of the sodium-ion layered oxide particles. Where, the spinel-type lithium salt in the coating layer may provide a three-dimensional channel for sodium ion diffusion at the interface between the positive electrode material and the electrolyte, increasing the diffusion path and improving the diffusion rate, thereby enhancing the rate capability of the battery. Meanwhile, the alkalinity of the spinel-type lithium salt is low, which may not only reduce the attack to the positive electrode adhesives, but also allow the deintercalation of lithium ions from the positive electrode preceding over sodium ions during the formation process and to form a film at the negative electrode, forming a dense SEI film composed of lithium salt and improving the cycle stability. Therefore, the positive electrode material provided in the embodiments of the present disclosure solves the problems of the interface impedance of the positive electrode materials of the existing sodium-ion battery being relatively large, and a positive electrode adhesive being prone to being attacked. In addition, the coating layer tightly coats the layered positive electrode material, which may reduce the contact interface between the layered positive electrode material and the electrolyte, improving the stability of sodium-ion layered oxide positive electrode material in air, alleviating the dissolution of metal ions, and improving the cycle performance of the battery.

In practical applications, TEM-SAED characterization of the positive electrode material provided in the embodiments of the present disclosure shows that its surface material has a crystal structure different from that of the inner layered oxide. Meanwhile, by characterizing the surface material with SEM EDS, the elementary composition and proportion of the spinel-type lithium salt may be determined, and combined with the crystal structure of the surface material characterized by the TEM-SAED characterization, the presence of spinel-type lithium salt in the surface material may be determined.

In some embodiments, the pH value of the positive electrode material is 10.4~12.5. The positive electrode material coated with a coating layer may reduce the residual alkali on the surface of the positive electrode material, decreasing its pH value, avoiding the influence of excessive residual alkali content on the slurrying process, meanwhile the low surface residual alkali is beneficial to improving the performance of the battery.

Optionally, in an implementation, the structural formula of the spinel-type lithium salt in the positive electrode material provided in the embodiments of the present disclosure is LiₐY₂O₄, where 0.8 ≤ a ≤ 1.1, and Y is selected from at least one of Fe, Ni, Cu, Zn, Co, Ti, Mg, Al, Nb, Ta, and Mn.

Compounds with the above structural formula may provide three-dimensional channels for sodium ion diffusion at the interface between the positive electrode material and the electrolyte. Since the diffusion path is increased, the diffusion rate of ions may be greatly improved, thereby enhancing the rate capability of the battery.

Optionally, in an implementation, the above-mentioned spinel-type lithium salt includes one or more of LiNi_{0.5}Mn_{1.5}O₄ (lithium nickel manganese oxide), and LiMn₂O₄ (lithium manganese oxide), i.e., the above-mentioned spinel-type lithium salt may be lithium nickel manganese oxide and lithium manganese oxide, etc. The spinel-type LiNi_{0.5}Mn_{1.5}O₄ is an excellent high-voltage positive electrode material with a working voltage of 4.7 V, and has high energy density (with a theoretical energy density of up to 695 Wh/kg), high thermal stability and electrochemical stability (its structure may be guaranteed not to be damaged even at a high temperature of 900°C), high safety and excellent rate capability (because the spinel structure has three-dimensional channels), while the raw material is of low cost and the production process is simple. Lithium manganese oxide with a spinel structure has advantages such as low-temperature resistance performance, good safety performance, and ease of preparation, etc.

Optionally, in a specific implementation, the above-mentioned spinel-type lithium salt is LiMn₂O₄. Due to the fact that lithium manganese oxide itself does not react with carbon dioxide and water, and has weak alkalinity, the use of spinel-type lithium manganese oxide to coat sodium-ion layered oxide may effectively reduce the contact between the layered positive electrode material and the carbon dioxide and water in the air, that is, it may reduce the production of alkaline substances such as NaOH and Na₂CO₃, reducing the surface alkalinity of the positive electrode material, which may not only improve the stability of the layered positive electrode material for sodium-ion batteries in the air, but also slow down the reaction between the layered positive electrode material and the positive electrode adhesive, improving the processing performance.

Optionally, the space group of the above-mentioned LiMn₂O₄ includes a mixed phase of Fd-3m and I41/amd, the above mixed phase may form vacancy defects and facilitate the intercalation and de-intercalation of sodium ions, thereby improving the rate capability of the battery.

Optionally, in the embodiments of the present disclosure, unit cell parameters of LiMn₂O₄ in the Fd-3m phase satisfy 8<a1=b1=c1<9, and unit cell parameters of LiMn₂O₄ in the I41/amd phase satisfy a2=b2≠c2; and/or 40%<a2/a1<60%, 95%<c2/c1<105%, 3.2 < a2=b2<7.2, and 0.45<c2<9.45.

When the unit cell parameters of LiMn₂O₄ in the Fd-3m phase satisfy a1=b1=c1, and the unit cell parameters of LiMn₂O₄ in the I41/amd phase satisfy a2=b2#c2, or when 40%<a2/a1<60% and 95%<c2/c1<105%, more voids may be generated in the coating layer, which is beneficial to the intercalation and de-intercalation of sodium ions, thereby improving the rate capability. When the unit cell parameters of LiMn₂O₄ in the Fd-3m phase and I41/amd phase satisfy the above two conditions at the same time, more voids are generated in the coating layer, which is more beneficial to the intercalation and de-intercalation of sodium ions and has a particularly good effect on improving the rate capability.

Optionally, in an implementation, in the coating layer provided in the embodiments of the present disclosure, the molar proportion of LiMn₂O₄ in the Fd-3m phase is 60~95%, which enables more voids to be generated in the coating layer, and is more beneficial to the de-intercalation of sodium ions, further improving the rate capability of the battery.

Optionally, in an implementation, the thickness of the above-mentioned coating layer is 50~500 nm, for example, one of 50 µm, 100 µm, 200 µm, 300 µm, 400 µm, or 500 µm, or a range value between any two of the above. In some embodiments, the thickness of the above-mentioned coating layer is 100~300 µm. When the thickness of the coating layer is within the above range, it may balance the energy density of the positive electrode material while reducing the surface alkalinity of the positive electrode material.

Optionally, in an implementation, the particle size Dv50 of the positive electrode material is 1~20 µm. In some embodiments, the particle size Dv50 of the positive electrode material may be one of 1 µm, 3 µm, 5 µm, 8 µm, 12 µm, 15 µm, 18 µm, or 20 µm, or a range value between any two of the above. When the particle size Dv50 of the positive electrode material is within the above range, the positive electrode material has a suitable specific surface area and enables the electrode plate of battery to have a suitable pore range, which is beneficial to reducing the occurrence of side reactions and improving the wetting performance of the electrode plate, thereby improving the cycle performance and rate capability of the battery.

In an actual preparation process, the Dv50 of the above-mentioned positive electrode material may be adjusted to 1-20 µm by changing the ball milling parameters. Specifically, the longer the ball milling time and the higher the rotate speed, the smaller the obtained Dv50 of the positive electrode material.

Optionally, in an implementation, the crystal structure of the above-mentioned sodium-ion layered oxide includes P2 type and O3 type; and/or the chemical formula of the sodium-ion layered oxide is NaₓMO₂, where M is selected from at least one of Fe, Ni, Li, Cu, Zn, Co, Ti, and Mn, and 1>x>0.67.

The positive electrode materials of the sodium-ion batteries may be divided into P2 type and O3 type due to their different crystal structures. The positive electrode materials with P2 type and O3 type mixed phase have the characteristics of high rated voltage and good cycle stability, the use of which as the core of the positive electrode materials is beneficial to improving the energy density and cycle life of the battery.

In the embodiments of the present disclosure, by using the sodium-ion layered oxide with P2 type and O3 type mixed phase as the inner core, and forming a coating layer by mixing and coating a spinel-type lithium salt on its surface, it may effectively utilize the three-dimensional channels provided by the spinel-type lithium salt at the interface between the positive electrode material and the electrolyte for sodium ion diffusion, reducing the interface reaction impedance of sodium ions, and optimizing the rate capability of the battery. Meanwhile, the radius of lithium ions in the coating layer is smaller than that of sodium ions, which allows the deintercalation of lithium ions from the positive electrode preceding over sodium ions during the formation process and to form a film at the negative electrode, forming a dense SEI film composed of lithium salt and improving the cycle stability. In addition, using a coating layer to coat the layer with a sodium-ion layered oxide with P2 type and O3 type mixed phase may reduce the contact interface between the sodium-ion layered oxide and the electrolyte, alleviating the dissolution of metal ions, and improving the cycle performance of the battery. Moreover, due to the low alkalinity of the spinel-type lithium salt, the use of which to coat a sodium-ion layered oxide with P2 type and O3 type mixed phase may reduce the attack to the positive electrode adhesive, making it easier to be processed into the positive electrode plate.

In practical applications, the ratio of P2 phase to O3 phase may be adjusted through the sodium content x. As x increases, the proportion of O3 phase increases, and as x decreases, the proportion of P2 phase increases.

The present disclosure also proposes a secondary battery including a positive electrode plate, where the above-mentioned positive electrode plate includes a positive electrode current collector and the above-mentioned positive electrode material disposed on the above-mentioned positive electrode current collector. Where, the secondary battery includes a sodium ion secondary battery.

Optionally, in an implementation, the above-mentioned positive electrode plate further includes an adhesive, which may include at least one of polyvinylidene fluoride (PVDF), polytetrafluoroethylene (PTFE), vinylidene fluoride-tetrafluoroethylene-propylene ternary copolymer, vinylidene fluoride-hexafluoropropylene-tetrafluoroethylene ternary copolymer, tetrafluoroethylene-hexafluoropropylene copolymer, and fluorinated acrylate resin.

In some embodiments, the preparation method of the positive electrode plate is as follows: the above components used for preparing the positive electrode plate, such as the above-mentioned positive electrode material, adhesive, and any other components are dispersed in a solvent such as N-methylpyrrolidone, etc., to form a positive electrode slurry; the positive electrode slurry is coated onto the positive electrode current collector; which is then subjected to processes such as oven-drying, and cold pressing, etc., to obtain the positive electrode plate.

The sodium-ion battery provided in the embodiments of the present disclosure further includes a negative electrode plate, a separator, and an electrolyte.

Where, the negative electrode plate includes a negative electrode current collector and a negative electrode active material layer arranged on the above-mentioned negative electrode current collector. The above-mentioned negative electrode active material layer may use the negative electrode active materials for batteries well-known in the art, such as artificial graphite, natural graphite, hard carbon, soft carbon, and carbon black, etc.

Where, the electrolyte plays the role of conducting ions between the positive electrode plate and the negative electrode plate, and the electrolyte may be in liquid state, gel state or all-solid-state. In some embodiments, the above-mentioned electrolyte adopts an electrolyte, which includes an electrolyte salt and a solvent, and the electrolyte salt is a sodium salt.

The embodiments of the present disclosure also proposes an electric device including the above-mentioned secondary battery, where the above-mentioned secondary battery is used to supply power.

For the embodiments of the above-mentioned secondary battery and electric device, the positive electrode plate of which includes a positive electrode active material layer, which includes the above-mentioned positive electrode material and may achieve the same technical effect, to avoid redundancy, it will not be repeated here, and the relevant information of which may make reference to the description section of the embodiments of positive electrode material.

In order to make the purpose of the invention, technical solution, and beneficial effects of the present disclosure clearer, the present disclosure will be further described below in conjunction with the examples. It should be understood that these examples are only used to describe the present disclosure rather than limiting the scope of the present disclosure.

The present disclosure will be explained in detail below through the examples.

### Performance testing methods

(1) pH value testing of positive electrode material:
   5 g of the positive electrode material was dissolved in 45 ml of ethanol solution, the solution was stirred at 200 r/min for 10 minutes, and the pH value of the solution was tested with a pH tester.
(2) Environmental stability testing:
   10 g of the positive electrode material was placed in an environment at 25°C and 50% of water content for 7 days, and the pH value was tested with the pH value testing method and used as a test indicator for environmental stability.
(3) Discharge rate capability performance testing:
   At room temperature, a fully charged battery was discharged to 1.5 V at a current density of 0.33C, and the capacity was recorded as C1;
   Again, at room temperature, the battery was charged to a fully charged state (a cut-off voltage of 3.8 V) at a current density of 1C, and the fully charged battery was discharged to 1.5 V at a current density of 5C, and the capacity was recorded as C2;
   The capacity retention rate C2/Cl was calculated as a test indicator for discharge rate capability.
(4) Sodium ion diffusion coefficient testing:
   After the formation and capacity grading of the battery, it was charged at a current density of 0.1C for 30 minutes, then laid aside for 2 hours, the above charging procedure was repeated until the voltage was charged to 4.0 V; and the sodium ion diffusion coefficient of the battery was obtained by using the constant current intermittent titration technique (GITT).
(5) Cycle performance testing: At room temperature, the battery was charged to 3.8 V at a current density of 1C, then discharged to 1.5 V at a current density of 1C, and the capacity C1 (initial capacity) during the first cycle of discharge process was recorded.

At room temperature, the battery was charged at 1C rate and discharged at 1C rate to perform a full charge and discharge cycle test with a voltage range of 1.5 V~3.8 V, and the test was stopped when the discharge capacity gradually decreased to 80%*C1, and the number of cycles was recorded.

### Embodiment 1

### (1) Preparation of positive electrode material:

a. At room temperature, a certain mass of Na₂CO₃, NiO, Fe₂O₃and MnO₂ were added to a ball mill in a molar ratio of n(Na):n(Ni):n(Fe):n(Mn)=1:1/3:1/3:1/3, the mixture was stirred at a rotate speed of 300 rpm for 12 hours and the powder precursor was pressed into sheets; then, the sheet-like precursor was sintered in an air environment at 800°C for 12 hours, and placed in a tube furnace after cooling down, and then sintered in a muffle furnace in an air environment at 800°C for 12 hours to obtain the sodium-ion layered oxide NaNi_{1/3}Fe_{1/3}Mn_{1/3}O₂ with the P2-O3 mixed phase;
b. The above-mentioned sodium-ion layered oxide was put into a ball milling device, and LiOH, Li₂CO₃, MnO₂ and MnO were added with the mass ratio of the added sodium-ion layered oxide, LiOH, Li₂CO₃, MnO₂ and MnO being controlled at 20:0.33:0.33:1:1, then the mixture was stirred at a rotate speed of 200 rpm for 12 hours, and then calcined at 1050°C for 12 hours, which reacted to form LiMn₂O₄ and was coated on the surface of the sodium-ion layered oxide, the resulting product was crushed and sieved to obtain a positive electrode material with a particle size of Dv50 of 8 µm.

### (2) Preparation of positive electrode plate

The positive electrode material prepared above was homogenized with PVDF and conductive carbon black in a mass ratio of 85:7.5:7.5, and uniformly coated on one side of the positive electrode current collector, the surface density of the electrode plate was controlled to 15 mg/cm², and the positive electrode plate was prepared after the high-temperature drying, rolling, cutting into sheets, and dividing into strips.

### (3) Preparation of negative electrode plate

The negative electrode material hard carbon, styrene butadiene rubber (SBR), conductive carbon black, and sodium carboxymethyl cellulose (CMC) were homogenized in a mass ratio of 85:5.5:5.5:4, and uniformly coated on one side of the negative electrode current collector, the coating surface density of the electrode plate was controlled to 8 mg/cm², and the negative electrode plate was prepared after the high-temperature drying, rolling, cutting into sheets, and dividing into strips.

### (4) Preparation of a sodium-ion battery:

Polypropylene (PP) with a thickness of 20 µm was used as a separator, and the positive electrode plate, the negative electrode plate, and the separator were wound and put into a shell and an electrolyte was injected for encapsulation (where the electrolyte was a solution of 1M NaClO₄ dissolved in a solvent of propylene carbonate (PC)) to prepare the sodium-ion battery.

### Embodiment 2

The difference between Embodiment 2 and Embodiment 1 lied in that in step (b), the calcination temperature was adjusted to 1300°C.

### Embodiment 3

The difference between Embodiment 3 and Embodiment 1 lied in that in step (b), the calcination temperature was adjusted to 1200°C.

### Embodiment 4

The difference between Embodiment 4 and Embodiment 1 lied in that in step (b), the calcination temperature was adjusted to 1100°C.

### Embodiment 5

The difference between Embodiment 5 and Embodiment 1 lied in that in step (b), the calcination temperature was adjusted to 900°C.

### Embodiment 6

The difference between Embodiment 6 and Embodiment 1 lied in that in step (b), the calcination temperature was adjusted to 800°C.

### Embodiment 7

The difference between Embodiment 7 and Embodiment 1 lied in that in step (a), the ball milling speed was adjusted to 300 rpm and the ball milling time was adjusted to 18 hours.

### Embodiment 8

The difference between Embodiment 8 and Embodiment 1 lied in that in step (a), the ball milling rotate speed was adjusted to 100 rpm and the ball milling time was adjusted to 12 hours.

### Embodiment 9

The difference between Embodiment 9 and Embodiment 1 lied in that in step (a), the ball milling rotate speed was adjusted to 400 rpm and the ball milling time was adjusted to 18 hours.

### Embodiment 10

The difference between Embodiment 10 and Embodiment 1 lied in that in step (a), the ball milling rotate speed was adjusted to 100 rpm and the ball milling time was adjusted to 1 hour.

### Embodiment 11

The difference between Embodiment 11 and Embodiment 1 lied in that in step (b), the mass ratio of the sodium-ion layered oxide, LiOH, Li₂CO₃, MnO₂ and MnO was adjusted to 80:0.33:0.33:1:1.

### Embodiment 12

The difference between Embodiment 12 and Embodiment 1 lied in that in step (b), the mass ratio of the sodium-ion layered oxide, LiOH, Li₂CO₃, MnO₂ and MnO was adjusted to 200:0.33:0.33:1:1.

### Embodiment 13

The difference between Embodiment 13 and Embodiment 1 lied in that in step (b), the mass ratio of the sodium-ion layered oxide, LiOH, Li₂CO₃, MnO₂ and MnO was adjusted to 15:0.33:0.33:1:1.

### Embodiment 14

The difference between Embodiment 14 and Embodiment 1 lied in that in step (b), the mass ratio of the sodium-ion layered oxide, LiOH, Li₂CO₃, MnO₂ and MnO was adjusted to 10:0.33:0.33:1:1.

### Embodiment 15

The difference between Embodiment 15 and Embodiment 1 lied in that in step (b), the mass ratio of the sodium-ion layered oxide, LiOH, Li₂CO₃, MnO₂ and MnO was adjusted to 20:0.3:0.35:1:1.

### Embodiment 16

The difference between Embodiment 16 and Embodiment 1 lied in that in step (b), the mass ratio of the sodium-ion layered oxide, LiOH, Li₂CO₃, MnO₂ and MnO was adjusted to 20:0.4:0.3:1:1.

### Embodiment 17

The difference between Embodiment 17 and Embodiment 1 lied in that in step (b), the mass ratio of the sodium-ion layered oxide, LiOH, Li₂CO₃, MnO₂ and MnO was adjusted to 20:0.5:0.25:1:1.

### Embodiment 18

The difference between Embodiment 18 and Embodiment 1 lied in that in step (b), the mass ratio of the sodium-ion layered oxide, LiOH, Li₂CO₃, MnO₂ and MnO was adjusted to 20:0.33:0.33:0.8:1.2.

### Embodiment 19

The difference between Embodiment 19 and Embodiment 1 lied in that in step (b), the mass ratio of the sodium-ion layered oxide, LiOH, Li₂CO₃, MnO₂ and MnO was adjusted to 20:0.33:0.33:1.2:0.8.

### Embodiment 20

The difference between Embodiment 20 and Embodiment 1 lied in that in step (b), the mass ratio of the sodium-ion layered oxide, LiOH, Li₂CO₃, MnO₂ and MnO was adjusted to 20:0.33:0.33:1.4:0.6.

### Embodiment 21

The difference between Embodiment 21 and Embodiment 1 lied in that in step (a), Na₂CO₃, NiO, Fe₂O₃ and MnO₂ were added into a ball mill in a molar ratio of n(Na):n(Ni): n(Fe):n(Mn)=0.8:0.4:0.2:0.4.

### Embodiment 22

The difference between Embodiment 22 and Embodiment 1 lied in that in step (a), Na₂CO₃, NiO, Fe₂O₃ and MnO₂ were added into a ball mill in a molar ratio of n(Na):n(Ni): n(Fe):n(Mn)=0.6:0.4:0.2:0.4.

### Embodiment 23

The difference between Embodiment 23 and Embodiment 1 lied in that in step (a), Na₂CO₃, CuO, Fe₂O₃ and MnO₂ were added into a ball mill in a molar ratio of n(Na):n(Cu):n(Fe):n(Mn)=0.6:0.4:0.2:0.4.

### Embodiment 24

The difference between Embodiment 24 and Embodiment 1 lied in that in step (a), Na₂CO₃, Co₂O₃ and MnO₂ were added into a ball mill in a molar ratio of n(Na):n(Co):n(Mn)=0.6:0.2:0.8.

### Embodiment 25

The difference between Embodiment 25 and Embodiment 1 lied in that in step (b), the above-mentioned sodium-ion layered oxide was placed in a ball milling device, and LiOH, Li₂CO₃, MnO₂, MnO and NiO were further added therein with the mass ratio of the sodium-ion layered oxide, LiOH, Li₂CO₃, MnO₂, MnO and NiO being 20:0.33:0.33:0.75:0.75:0.5, then the mixture was stirred at a rotate speed of 200 rpm for 12 hours, and then calcined at 1050°C for 12 hours, which reacted to form LiNi_{0.5}Mn_{1.5}O₄ and was coated on the surface of the sodium-ion layered oxide.

### Comparative Example 1

The difference between Comparative Example 1 and Example 1 lied in that in the process of preparing the positive electrode material, the sodium-ion layered oxide was not subjected to coating treatment, that is, the step (b) was omitted, and the sodium-ion layered oxide with the prepared P2-O3 mixed phase was directly used to prepare the positive electrode plate.

### Comparative Example 2

The difference between Comparative Example 2 and Example 1 lied in that in step (b), Na₂CO₃, Co₂O₃ and MnO₂ were added into a ball milling device in a molar ratio of n(Na):n(Co):n(Mn)=0.6:0.2:0.8.

The proportion of Fd-3m phase, the thickness of coating layer, the unit cell parameters a2/a1 and c2/c1 in the coating layer, the pH value, and the particle size Dv50 in Examples and Comparative Examples were tested, and the test data are shown in Table 1.

The sodium ion conductivity testing, discharge rate capability performance testing, cycle performance testing, and environmental stability testing were carried out on the batteries prepared in the Embodiments and Comparative Examples, and the test data are shown in Table 1.

**Table 1**

| | Molecular formula of sodium-ion layered oxide | Molecul ar formula of coating layer | Propor tion of Fd-3m phase (%) | Positive electrode particle size Dv50 (µm) | Thick ness of coatin g layer (nm) | a2/a 1 (%) | c2/c 1 (%) | pH value of positive electrode material | Envir onme ntal stabil ity (pH) l | Sodium -ion conduct ivity (10^{- 12}S/cm) | Dischar ge rate capability perform ance (%) | Cycle performance of battery (cycles) |
|---|---|---|---|---|---|---|---|---|---|---|---|---|
| Embodiment 1 | NaNi_{1l/3}Fe _{1/3}Mn_{1/3}O₂ | LiMn₂O ₄ | 76 | 8 | 270 | 50 | 100 | 11.3 | 11.5 | 8.6 | 94 | 2041 |
| Embodiment 2 | NaNi_{1l/3}Fe _{1/3}Mn_{1/3}O₂ | LiMn₂O ₄ | 55 | 8 | 270 | 50 | 100 | 11.3 | 11.5 | 7.2 | 86 | 2231 |
| Embodiment 3 | NaNi_{1l/3}Fe _{1/3}Mn_{1/3}O₂ | LiMn₂O ₄ | 60 | 8 | 270 | 50 | 100 | 11.3 | 11.5 | 7.7 | 88 | 2142 |
| Embodiment 4 | NaNi_{1l/3}Fe _{1/3}Mn_{1/3}O₂ | LiMn₂O ₄ | 70 | 8 | 270 | 50 | 100 | 11.3 | 11.5 | 7.9 | 90 | 2078 |
| Embodiment 5 | NaNi_{1l/3}Fe _{1/3}Mn_{1/3}O₂ | LiMn₂O ₄ | 95 | 8 | 270 | 50 | 100 | 11.3 | 11.5 | 9.0 | 96 | 1980 |
| Embodiment 6 | NaNi_{1l/3}Fe _{1/3}Mn_{1/3}O₂ | LiMn₂O ₄ | 99 | 8 | 270 | 50 | 100 | 11.3 | 11.5 | 9.4 | 97 | 1921 |
| Embodiment 7 | NaNi_{1l/3}Fe _{1/3}Mn_{1/3}O₂ | LiMn₂O ₄ | 76 | 5 | 270 | 50 | 100 | 11.3 | 11.5 | 9.1 | 95 | 1978 |
| Embodiment 8 | NaNi_{1l/3}Fe _{1/3}Mn_{1/3}O₂ | LiMn₂O ₄ | 76 | 12 | 270 | 50 | 100 | 11.3 | 11.5 | 8.4 | 93 | 2098 |
| Embodiment 9 | NaNi_{1l/3}Fe _{1/3}Mn_{1/3}O₂ | LiMn₂O ₄ | 76 | 1 | 270 | 50 | 100 | 11.3 | 11.5 | 9.2 | 96 | 1902 |
| Embodiment 10 | NaNi_{1l/3}Fe _{1/3}Mn_{1/3}O₂ | LiMn₂O ₄ | 76 | 20 | 270 | 50 | 100 | 11.3 | 11.5 | 8.1 | 90 | 1997 |
| Embodiment 11 | NaNi_{1l/3}Fe _{1/3}Mn_{1/3}O₂ | LiMn₂O ₄ | 76 | 8 | 50 | 50 | 100 | 12.5 | 13.6 | 8.2 | 92 | 2087 |
| Embodiment 12 | NaNi_{1l/3}Fe _{1/3}Mn_{1/3}O₂ | LiMn₂O ₄ | 76 | 8 | 10 | 50 | 100 | 12.2 | 12.9 | 8.0 | 90 | 2154 |
| Embodiment 13 | NaNi_{1l/3}Fe _{1/3}Mn_{1/3}O₂ | LiMn₂O ₄ | 76 | 8 | 500 | 50 | 100 | 11.1 | 11.2 | 8.8 | 95 | 2003 |
| Embodiment 14 | NaNi_{1l/3}Fe _{1/3}Mn_{1/3}O₂ | LiMn₂O ₄ | 76 | 8 | 600 | 50 | 100 | 10.8 | 10.9 | 9.0 | 96 | 1995 |
| Embodiment 15 | NaNi_{1l/3}Fe _{1/3}Mn_{1/3}O₂ | LiMn₂O ₄ | 76 | 8 | 270 | 40 | 100 | 11.3 | 11.5 | 8.4 | 92 | 2078 |
| Embodiment 16 | NaNi_{1l/3}Fe _{1/3}Mn_{1/3}O₂ | LiMn₂O ₄ | 76 | 8 | 270 | 60 | 100 | 11.3 | 11.5 | 8.8 | 95 | 2010 |
| Embodiment 17 | NaNi_{1l/3}Fe _{1/3}Mn_{1/3}O₂ | LiMn₂O ₄ | 76 | 8 | 270 | 70 | 100 | 11.3 | 11.5 | 9.0 | 96 | 1997 |
| Embodiment 18 | NaNi_{1l/3}Fe _{1/3}Mn_{1/3}O₂ | LiMn₂O ₄ | 76 | 8 | 270 | 50 | 95 | 11.3 | 11.5 | 8.4 | 92 | 2076 |
| Embodiment 19 | NaNi_{1l/3}Fe _{1/3}Mn_{1/3}O₂ | LiMn₂O ₄ | 76 | 8 | 270 | 50 | 105 | 11.3 | 11.5 | 8.8 | 95 | 2006 |
| Embodiment 20 | NaNi_{1l/3}Fe _{1/3}Mn_{1/3}O₂ | LiMn₂O ₄ | 76 | 8 | 270 | 50 | 115 | 11.3 | 11.5 | 9.0 | 96 | 1987 |
| Embodiment 21 | Na_{0.8}Ni_{0.4} Fe_{0.2}Mn_{0.4} O₂ | LiMn₂O ₄ | 76 | 8 | 270 | 50 | 100 | 10.9 | 11.4 | 8.8 | 95 | 2007 |
| Embodiment 22 | Na_{0.6}Ni_{0.4} Fe_{0.2}Mn_{0.4} O₂ | LiMn₂O ₄ | 76 | 8 | 270 | 50 | 100 | 10.4 | 10.9 | 9.0 | 96 | 1994 |
| Embodiment 23 | Na_{0.8}Cu_{0.4} Fe_{0.2}Mn_{0.4} O₂ | LiMn₂O ₄ | 76 | 8 | 270 | 50 | 100 | 12.5 | 13.1 | 8.4 | 90 | 2010 |
| Embodiment 24 | Na_{0.8}Co _{0.2}Mn_{0.8}O₂ | LiMn₂O ₄ | 76 | 8 | 270 | 50 | 100 | 12.1 | 12.7 | 8.3 | 89 | 2007 |
| Embodiment 25 | NaNi_{1l/3}Fe _{1/3}Mn_{1/3}O₂ | LiNi_{0.5} Mn_{1.5}O₄ | 76 | 8 | 270 | 50 | 100 | 12.1 | 12.8 | 8.6 | 88 | 2012 |
| Comparative Example 1 | NaNi_{1l/3}Fe _{1/3}Mn_{1/3}O₂ | / | / | 8 | / | / | / | 13.1 | 13.8 | 6.2 | 77 | 1389 |
| Comparative Example 2 | NaNi_{1l/3}Fe _{1/3}Mn_{1/3}O₂ | Na_{0.8}Co_{0 .2}Mn_{0.8}O ₂ | 76 | 8 | 270 | 50 | 100 | 12.9 | 13.7 | 6.3 | 74 | 1490 |

In conclusion, in the embodiments, the provided positive electrode material comprises an inner core and a coating layer arranged on the surface of the inner core, where the inner core comprises a sodium-ion layered oxide, and the coating layer comprises a spinel-type lithium salt. Where, the coating layer tightly coats the layered positive electrode material, which may reduce the contact interface between the layered positive electrode material and an electrolyte, alleviating the dissolution of metal ions, and improving the cycle performance of the battery. Meanwhile, the spinel-type lithium salt in the coating layer may provide a three-dimensional channel for sodium ion diffusion at the interface between the positive electrode material and the electrolyte, increasing the diffusion path and improving the diffusion rate, thereby enhancing the rate capability of the battery cell. In addition, the alkalinity of the spinel-type lithium salt is low, which may not only reduce the attack to the positive electrode adhesives, but also allow the deintercalation of lithium ions from the positive electrode preceding over sodium ions during the formation process and to form a film at the negative electrode, forming a dense SEI film composed of lithium salt and improving the cycle stability. Therefore, the positive electrode material provided in the embodiments of the present disclosure solves the problems of the interface impedance of the positive electrode materials of the existing sodium-ion battery being relatively large, and a positive electrode adhesive being prone to being attacked.

Although the preferred embodiments of the present disclosure have been described, those skilled in the art may make additional changes and modifications to these embodiments once they have learned the basic creative concepts. Therefore, the claims are intended to be interpreted as including the preferred embodiments and all changes and modifications falling within the scope of the embodiments of the present disclosure.

A positive electrode material, a secondary battery, and an electric device provided in the present disclosure have been described in detail hereinbefore, and specific examples are used herein to explain the principles and embodiments of the present disclosure. The above explanations for the embodiments are only used to assist in the understanding of the method and core idea of the present disclosure, meanwhile, for those of ordinarily skilled in the art, changes may be made to the specific embodiments and scope of application based on the ideas of the present disclosure. In summary, the content of this specification should not be understood as limitation on the present disclosure.

The above descriptions are only the preferred embodiments of the present disclosure, and are not intended to limit the present disclosure in any other form. Any skilled person in the art may make changes or modifications to the above disclosed technical contents to achieve the equivalent embodiments with equivalent changes. However, any simple modifications, equivalent changes, and variations made to the above embodiments based on the technical essence of the present disclosure without departing from the content of the technical solution of the present disclosure will still fall within the scope of protection of the technical solution of the present disclosure.

## Claims

1. A positive electrode material, wherein, the positive electrode material comprises an inner core and a coating layer arranged on a surface of the inner core, the inner core comprises a sodium-ion layered oxide, and the coating layer comprises a spinel-type lithium salt.

2. The positive electrode material of claim 1, wherein, the structural general formula of the spinel-type lithium salt comprises LiₐY₂O₄, wherein 0.8 ≤ a ≤ 1.1, and Y is selected from one or more of Fe, Ni, Cu, Zn, Co, Ti, Mg, Al, Nb, Ta, Cr, and Mn.

3. The positive electrode material of claim 1, wherein, the spinel-type lithium salt comprises one or more of LiNi_{0.5}Mn_{1.5}O₄ and LiMn₂O₄.

4. The positive electrode material of claim 3, wherein, the space group of the LiMn₂O₄ comprises a mixed phase of Fd-3m and I41/amd.

5. The positive electrode material of claim 4, wherein, unit cell parameters of LiMn₂O₄ in the Fd-3m phase satisfy a1=b1=c1, and unit cell parameters of LiMn₂O₄ in the I41/amd phase satisfy a2=b2≠c2;
and/or 40%<a2/a1<60% and 95%<c2/c1<105%.

6. The positive electrode material of claim 5, wherein, 8<a1=b1=c1<9, 3.2<a2=b2<7.2, and 0.45<c2<9.45.

7. The positive electrode material of claim 5 or 6, wherein, in the coating layer, the molar proportion of LiMn₂O₄ in the Fd-3m phase is 60~95%.

8. The positive electrode material of claim 1, wherein, the pH value of the positive electrode material is 10.4~12.5.

9. The positive electrode material of claim 1, wherein, the thickness of the coating layer is 50~500 nm.

10. The positive electrode material of claim 1, wherein, the thickness of the coating layer is 100~300 µm.

11. The positive electrode material of claim 1, wherein, the particle size Dv50 of the positive electrode material is 1 µm~20 µm.

12. The positive electrode material of claim 1, wherein, the crystal structure of the sodium-ion layered oxide comprises P2 type and O3 type.

13. The positive electrode material of claim 1, wherein, the chemical formula of the sodium-ion layered oxide is NaₓMO₂, wherein M is selected from at least one of Fe, Ni, Li, Cu, Zn, Co, Ti, and Mn, and 1>x>0.67.

14. A secondary battery, comprising a positive electrode plate, wherein, the positive electrode plate comprises a positive electrode current collector and a positive electrode material of any one of claims 1 to 13 disposed on the positive electrode current collector.

15. An electric device, wherein, the electric device comprises the secondary battery of claim 14, and the secondary battery serves as a power supply for the electric device.
